Europäisches Patentamt

European Patent Office

Office européen des brevets

(19)

(11) **EP 1 159 638 B1**

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(21) Anmeldenummer: **00991566.1**

(22) Anmeldetag: **22.12.2000**

(51) Int Cl.$^7$: **G01S 13/93**, G01S 7/40, G01S 7/497

(86) Internationale Anmeldenummer:
**PCT/DE2000/004620**

(87) Internationale Veröffentlichungsnummer:
**WO 2001/050154 (12.07.2001 Gazette 2001/28)**

(54) **VERFAHREN UND VORRICHTUNG ZUR DEJUSTAGEERKENNUNG BEI EINEM KRAFTFAHRZEUG-RADARSYSTEM BZW. EINEM KRAFTFAHRZEUG-SENSORSYSTEM**

METHOD AND DEVICE FOR MISMATCH RECOGNITION IN A VEHICLE RADAR SYSTEM OR A VEHICLE SENSOR SYSTEM

PROCEDE ET DISPOSITIFS DE DETECTION DE DESALIGNEMENT DANS UN SYSTEME RADAR POUR VEHICULES OU UN SYSTEME CAPTEUR POUR VEHICULES

(84) Benannte Vertragsstaaten:
**DE FR GB**

(30) Priorität: **30.12.1999 DE 19964020**

(43) Veröffentlichungstag der Anmeldung:
**05.12.2001 Patentblatt 2001/49**

(73) Patentinhaber: **ROBERT BOSCH GMBH**
**70442 Stuttgart (DE)**

(72) Erfinder:
• **MICHI, Harald**
**75248 Oelbronn-Duerrn (DE)**

• **LICHTENBERG, Bernd**
**71665 Vaihingen/Enz (DE)**
• **UHLER, Werner**
**76646 Bruchsal (DE)**

(56) Entgegenhaltungen:
| | |
|---|---|
| DE-A- 19 633 704 | DE-A- 19 751 004 |
| DE-A- 19 833 065 | DE-C- 19 736 965 |
| US-A- 5 930 739 | US-A- 5 977 906 |
| US-A- 5 986 601 | |

EP 1 159 638 B1

**Beschreibung**

Die vorliegende Erfindung betrifft Verfahren und Vorrichtungen zur Dejustageerkennung bei einem Kraftfahrzeug-Radarsystem bzw. einem Kraftfahrzeug-Sensorsystem nach den Oberbegriffen der nebengeordneten Ansprüche. Solche Verfahren und solche Vorrichtungen werden beispielsweise im Rahmen einer automatischen Geschwindigkeitsregelung eines Fahrzeugs zur Detektion vorausfahrender Fahrzeuge eingesetzt. Ein gattungsgemäßes System wird auch als Adaptive Cruise Control (ACC) bezeichnet. Beim Einbau des Kraftfarzeug-Radarsystems in das Kraftfahrzeug ist eine präzise Vorgehensweise und eine exakte Ausrichtung einer Zentralachse der abgestrahlten elektromagnetischen Wellen auf eine zentralen Linie des Kraftfahrzeugs in Längsrichtung erforderlich.

Stand der Technik

Die US 5,930,739 offenbart ein Verfahren zur Messung der Drehrate eine Kraftfahrzeuges, das mit einem LIDAR-Radar ausgestattet ist. Bei diesem Verfahren wird die von einem Drehratensensor ermittelte Drehrate anhand der eigenen Fahrzeuggeschwindigkeit, einer longitudinalen Entfernung zu einem festen Detektionsobjekt und der relativen Quergeschwindigkeit des selben festen Detektionsobjektes in Bezug auf das eigene Fahrzeug bestimmt. Der Nachteil dieses Verfahrens ist darin zu sehen, daß zur genauen Bestimmung bzw. Korrektur der Drehrate kleine Offsets und weit entfernte Detektionsobjekte erforderlich sind. Insbesondere weit entfernte Objekte sind bei Radar-Anwendungen jedoch "schwache Ziele", die schwer zu messen sind und deren . Position in Querrichtung zum eigenen Kraftfahrzeug wegen der begrenzten Winkelauflösung des Radar-Systems nicht immer exakt erfaßbar ist. Aus dem selben Grund (bebrenzte Winkelauflösung) ist auch die Bestimmung von Quergeschwindigkeiten detektierter Objekte, insbesondere in größeren Entfernungen, fehlerbehaftet.

Die DE 197 36 965 C1 offenbart ein Verfahren und eine Anordnung zur Überprüfung der Gierrate eines sich bewegenden Objektes, insbesondere eines Kraftfahrzeuges. Hierbei wird die Gierrate mit Hilfe von Objekten überprüft, die sich im aktuellen Umfeld des Kraftfahrzeuges befinden. Voraussetzung ist, daß es sich bei den von einem Umfeldsensor erfaßten Objekten um feststehende Objekte handelt. In diesem Fall wird die aktuelle Position des detektierten Objekts mit einer aus der erstmaligen Erfassung des detektierten Objekts abgeleiteten Projektion auf die aktuelle Position verglichen. Hierzu wird eine Objektspur bestimmt, die alle Positionen des detektierten Objekts zu unterschiedlichen vorgegebenen Zeitpunkten enthält. Die Objektspur wird dabei ausgehend von der erfaßten Position des detektierten Objekts mit Hilfe der Geschwindigkeit und der Gierrate des Kraftfahrzeugs gebildet. Der Nachteil des Verfahrens liegt darin, daß eine Zerlegung der bestimmten Radialentfernung des detektierten Objekts zum eigenen Kraftfahrzeug in x- und y-Positionskoordinaten erforderlich ist. In eine solche Zerlegung geht in der Regel der Winkel des detektierten Objekts ein, der bei einem auf Laser- oder Radarbasis arbeitenden System nicht besonders exakt bestimmbar ist, da von einer begrenzten Winkelauflösung ausgegangen werden muß.

Die DE 197 51 004 A1 offenbart ein Verfahren zur Verarbeitung von Radarsignalen, bei dem durch Auswertung einer Mehrzahl von zu erfaßten Objekten gebildeten Objektspuren eine aktuelle Bewegungsrichtung ermittelt wird. Bei einer Abweichung dieser Bewegungsrichtung von der Ausrichtung der Radaranordnung werden die bei der Erfassung der Objekte im Rahmen der Winkelauflösung der Radaranordnung ermittelten Objektwinkel durch die bestimmte Abweichung korrigiert und auf die Bewegungsrichtung bezogen. Das Verfahren bezieht sich auf eine Trajektorienanalyse der detektierten Objekte, wobei insbesondere die Reflexionen von feststehenden Objekten verwendet werden, da diese eine besonders günstige Grundlage für die Ermittlung der mittleren Bewegungsrichtung bilden.

Aus der DE 198 33 065 A1 ist eine Winkelverschiebungsbestimmungsvorrichtung zum Erfassen der Winkelverschiebung der Radarzentralachse zur Verwendung in einem Erfassungssystem für ein Kraftfahrzeug bekannt. Bei dieser Vorrichtung werden bei der Erfassung der Positionen der Ziele zwei Situationen unterschieden. Der erste Fall ist der, daß vorausfahrende Fahrzeuge erfaßt werden, während sich das eigene Kraftfahrzeug in einer Geradeausfahrt befindet. Hierbei sollte sich bei einem korrekt eingestellten Erfassungssystem eine Verteilung der detektierten Positionen der vorausfahrenden Fahrzeuge ergeben, die parallel zur eigenen Fahrtrichtung liegt. Ist dies nicht der Fall, so wird eine Schwerpunktbildung durchgeführt, eine entsprechende Ausgleichsgerade ermittelt und das Erfassungssystem entsprechend korrigiert. Der zweite Fall ist der, daß sich das eigene Fahrzeug in einer Kurvenfahrt befindet. In diesem Fall wird eine Analyse der Relativgeschwindigkeitsvektoren zwischen dem eigenen Fahrzeug und den detektierten Objekten durchgeführt. Nachteil dieses Verfahrens ist, daß zur eine Analyse der Relativgeschwindigkeitsvektoren die x- und y-Komponenten des Relativgeschwindigkeitsvektors erforderlich sind, die wie bereits angeführt nicht besonders exakt bestimmt werden können.

Aus der DE 196 33 704 A1 ist eine Fahrzeugumgebungsüberwachungsvorrichtung bekannt, die eine Überwachungseinrichtung zur Erfassung von Objekten, welche sich in der Umgebung eines Fahrzeuges befinden, und zur Ausgabe von Positionen der Objekte, welche durch ein vorbestimmtes Erfassungkoordinatensystem definiert werden, eine Koordinatentransformationseinrichtung, welche ein Berechnungskoordinatensystem hat, in welchem eine Position der überwachungseinrichtung ein Ursprungspunkt ist, eine Fahrtrichtung des Fahrzeuges eine erste Koordinatenachse ist, und eine zur ersten Koordinatenachse orthogonale Achse eine zweite Koordinatenachse ist, zur Transformierung der Positionen der Objekte in Positionen, welche durch das Berechnungskoordinatensystem definiert sind, eine Fahrzeuggeschwindigkeits-Erfassungsvorrichtung zur Erfassung einer Fahrzeugesgeschwindigkeit des Fahrzeuges, eine Stationärobjekt-Auswahleinrichtung zum Auswählen einer Vielzahl von stationären Objekten unter den Objekten, auf der Grundlage der Fahrzeuggeschwindigkeit ; und eine Fehlererfassungseinrichtung zur Erfassung einer Abweichung einer optischen Achse der Überwachungseinrichtung auf der Grundlage der Fahrzeuggeschwindigkeit, der Komponenten der ersten Koordinatenachse der Vielzahl von stationären Objektes, welche durch die Stationärobjekt-Auswahleinrichtung ausgewählt wurden, und von Veränderung Größen in Komponenten der zweiten Koordinatenachse der Vielzahl von stationären Objekten in einer vorbestimmten Zeitspanne aufweist.

Vorteile der Erfindung

Das erfindungsgemäße Verfahren ist gegenüber dem Stand der Technik dadurch gekennzeichnet, daß anhand des relativen Winkels (alpha_m), des Korrekturwerts (alpha_null), des relativen Abstands (d_m), der Relativgeschwin-digkeit (d_m_punkt), der Fahrzeug-Eigengeschwindigkeit (v_F) und einer von einem Drehratensensor gelieferten Drehrate (Psi_m_punkt) ein Korrekturwert (Psi_null_punkt) für die Drehrate (Psi_m_punkt) bestimmt wird. Mit anderen Worten: Mit Hilfe der von dem Kraftfahrzeug-Radarsystem gelieferten Meßwerte kann der von einem beliebigen Drehratensensor (Gierratensensor) gelieferte Drehratenmeßwert korrigiert werden. Auf diese Weise ist eine zuverlässige und schnelle Bestimmung der Drehrate (Gierrate) des Kraftfahrzeugs möglich.

Bei einer besonders vorteilhaften.Weiterbildung des erfindungsgemäßen Verfahrens wird anhand des relativen Winkels (alpha_m), des Korrekturwerts (alpha_null), des relativen Abstands (d_m), der Relativgeschwindigkeit (d_m_punkt) und der Fahrzeug-Eigengeschwindigkeit (v_F) eine Drehrate (Psi_punkt) des Kraftfahrzeugs bestimmt. Durch dieses erfindungsgemäße Verfahren ist es möglich unter Zuhilfenahme der von einem Kraftfahrzeug-Radarsystem gelieferten Daten, die Drehrate (Gierrate) des Kraftfahrzeugs zuverlässig und schnell zu bestimmen, ohne daß ein konventioneller Drehratensensor in dem Kraftfahrzeug vorhanden sein muß.

Der große Vorteil des erfindungsgemäßen Verfahrens und der erfingsgemäßen Vorrichtung liegt darin, daß die Offset-Bestimmung von Winkelmesswert und Drehratenmesswert sowie die Drehratenbestimmung während des Betriebes des Fahrzeugs "online" erfolgen kann. Damit kann auch während des Betriebs des Kraftfahrzeugs ein sich verstellender Offset des Winkelmesswertes und des Drehratenmesswertes permanent korrekt kompensiert werden. Eine separate Vermessung der Sensoren, zum Beispiel in einer Werkstatt, ist nicht erforderlich. Hierbei beruht das erfindungsgemäße Verfahren nicht auf einer Mittelwertbildung der von dem Kraftfahrzeug-Radarsystem erfaßten Daten von stehenden Objekten, sondern auf einer Berechnung, die die von den stehenden Objekten erfaßten Daten als Grundlage hat. Ein weiterer entscheidender Vorteil ist, daß die Berechnung in jeder beliebigen Fahrsituation erfolgen kann, unabhängig davon, ob sich das Kraftfahrzeug in einer gerade Linie fortbewegt, oder ob sich das Kraftfahrzeug in einer Kurvenfahrt befindet.

Beschreibung von Ausführungsbeispielen

Im folgenden werden Ausführungsbeispiele des erfindungsgemäßen Verfahrens und der erfindungsgemäßen Vorrichtung zur Dejustageerkennung bei einem Kraftfahrzeug-Radarsystem anhand von Zeichnungen erläutert.

Es zeigen:

Figur 1    zeigt ein Kraftfahrzeug, das ein stehendes Objekt detektiert,

Figur 2    zeigt eine Darstellung der Koordinatensysteme, die für die Bestimmung der Dejustage berücksichtigt werden müssen,

Figur 3    ein Ablaufdiagramm des erfindungsgemäßen Verfahrens und

Figur 4    eine Darstellung einer erfindungsgemäßen Vorrichtung.

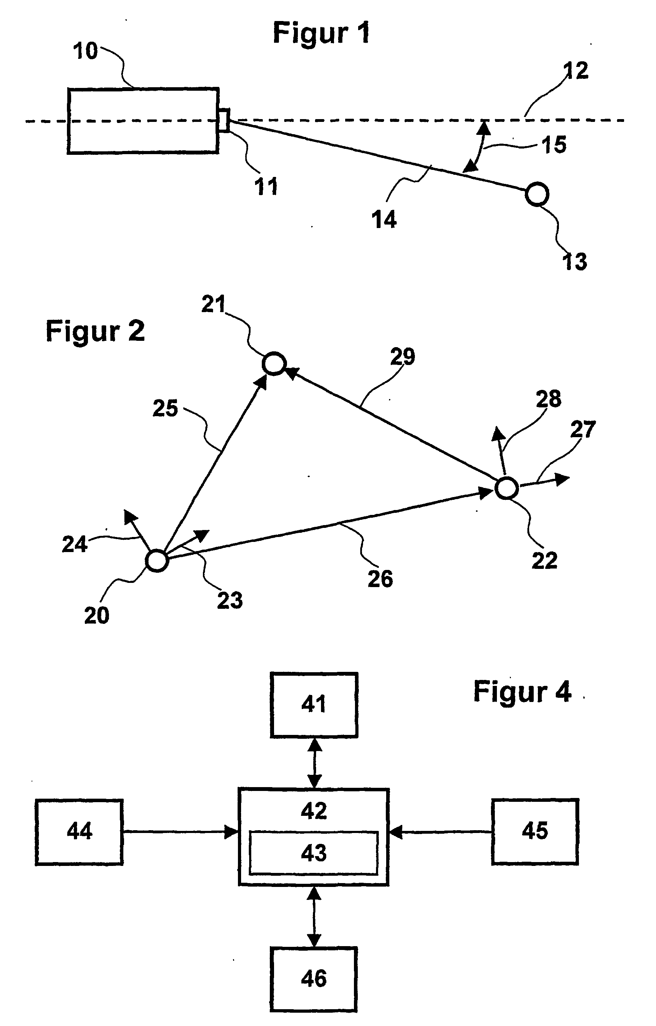

Figur 1 zeigt ein Kraftfahrzeug 10, das mit einem erfindungsgemäßen Kraftfahrzeug-Radarsystem 11 ausgestattet ist, das in diesem Ausführungsbeispiel in Fahrtrichtung in der Mitte des Kraftfahrzeuges 10 montiert ist. Mit 12 ist die Fahrzeuglängsachse des Kraftfahrzeugs bezeichnet, auf . die idealerweise auch die Strahlrichtung des Radarsystems 11 ausgerichtet sein sollte. Mit 13 ist ein von dem Radarsystem 11 detektiertes mögliches stehendes Objekt, beispielsweise eine Bake am Straßenrand oder ein Baum, bezeichnet. Die Entfernung zum detektierten Objekt 13 ist mit 14 und der Winkel der detektierten Position bezogen auf die Fahrzeuglängsachse 12 ist mit 15 gekennzeichnet. Erfindungsgemäß wird eine mögliche Dejustage des Radarsystems 11 anhand der von dem stehenden Objekt 13 gelieferten Meßdaten unter Zuhilfenahme der Fahrzeugeigengeschwindigkeit bestimmt. Hierzu ist im Extremfall lediglich eine deteketierte Position des stehenden Ziels 13 erforderlich. Wird ein und das selbe Ziel in mehreren Detektionsschritten erfaßt so können die berechneten bzw. bestimmten Korrekturwerte für das Radarsystem entsprechend gefiltert werden. Wird mehr als ein stehendes Objekt detektiert, was in der Praxis eher der Regelfall ist, so können die bestimmten Korrekturwerte für das Radarsystem über mehrere Objekte gemittelt werden. Im Anschluß an die Bestimmung eines Korrekturwertes für die Winkelmessung des Radarsystems kann erfindungsgemäß die Drehrate des Kraftfahrzeugs entweder bestimmt oder unter Zuhilfenahme eines von einem Drehratensensor gelieferten Signals.korrigiert werden. Andere statistische Nachbehandlungen liegen ebenfalls im Rahmen des erfindungsgemäßen Verfahrens. Hierbei kann die Art und Weise der Nachbehandlung auch davon abhängig gemacht werden, wieviel Zeit für die Auswertung beziehungsweise für die Bestimmung der Korrekturwerte und/oder'der Drehrate zur Verfügung steht.

Figur 2 zeigt eine Darstellung der Koordinatensysteme, die für die Bestimmung der Dejustage berücksichtigt werden müssen. Hierbei ist ein weltfester Punkt, sozusagen der Ursprung des "Weltkoordinatensystems" mit 20 bezeichnet. Mit 22 ist die gegenwärtige Position des Kraftfahrzeuges bezeichnet und mit 21 ist die mögliche Position eines detektierten stehenden Objekts bezeichnet. 23 und 24 sollen die Einheitsvektoren des Weltkoordinatensystems darstellen und 27 und 28 die Einheitsvektoren des Fahrzeugkoordinatensystems.

Der Vektor, der die Position des stehenden Objekts 21 im weltkoordinatensystem beschreibt ergibt sich aus einer Summe von skalaren vielfachen der Einheitsvektoren des Weltkoordinatensystems 23, 24:

$$R\_WO\_vektor(t) = x\_1W \cdot e\_1W\_vektor + x\_2W \cdot e\_2W\_vektor$$

Aus Sicht des Kraftfahrzeuges 22 ergibt sich die Position des stehenden Objekts 21 aus einer Summe von skalaren Vielfachen der Einheitsvektoren des Fahrzeugkoordinatensystems 23, 24:

$$R\_FO\_vektor (t) = x\_1F \cdot e\_1F\_vektor + x\_2F \cdot e\_2F\_vektor$$

Wird der Vektor, der die Position des Fahrzeugs aus Sicht der festen Welt beschreibt mit R_WF_vektor(t) bezeichnet, so kann die Position des Objekts 22 auch wie folgt beschrieben werden:

$$R\_WO\_vektor(t) = R\_WF\_vektor(t) + R\_FO\_vektor(t) =$$

$$R\_WF\_vektor(t) + x\_1F \cdot e\_1F\_vektor + x\_2F \cdot e\_2F\_vektor$$

wobei:

| | |
|---|---|
| (t) = | zeitliche Abhängigkeit des betreffenden Wertes |
| R_WO_vektor(t) = | Vektor von der festen Welt zum Objekt 25 |
| e_1W_vektor und e_2W_vektor = | Einheitsvektoren des Weltkoordinatensystems 23,24 |
| x_1W und x_2W = | Skalare Faktoren im Weltkoordinatensystem |
| R_FO_vektor(t) = | Vektor vom Fahrzeug zum Objekt 29 |
| e_1F_vektor und e_2F_vektor = | Einheitsvektoren 27,28 des Fahrzeugkoordinatensystems |
| x_1F und x_2F = | Skalare Faktoren im Fahrzeugkoordinatensystem |
| R_WF_vektor(t) = | Vektor von der festen Welt zum Fahrzeug'26 |

Ausgehend von diesen Festlegungen kann man durch Einsetzen der aus Figur 1 ersichtlichen Beziehungen Bestimmungsgleichungnen für die Offsets von Winkel und Drehrate bestimmen, die unter der Vorraussetzung von kleinen Winkeloffsets vereinfacht werden können. Damit ergeben sich erfindungsgemäß die Offsets für den Winkel und die Drehrate nach den folgenden Beziehungen:

$$alpha\_null \approx ( - (cos(alpha\_m) / sin(alpha\_m))$$

$$- ( 1 / sin(alpha\_m) \cdot d\_m\_punkt /v\_F))$$

$$Psi\_null\_punkt \approx Psi\_m\_punkt - v\_F / (d\_m \cdot d\_m\_punkt) \cdot$$

4

$$( \; d/dt( \; (d\_m \cdot \sin(alpha\_m) \; )$$

$$- \; alpha\_null \cdot d/dt \; (d\_m \cdot \cos(alpha\_m) \; ))$$

wobei:

| | |
|---|---|
| d/dt (z) = | zeitliche Ableitung von z (z als Beispiel für jeden beliebigen zeitlich abzuleitenden Wert) |
| alpha_null = | Winkeloffset des Umgebungssensors |
| alpha_m = | nicht Offset-korrigierter Winkelmeßwert |
| d_m = | gemessener Abstand |
| d_m_punkt = | gemessene Relativgeschwindigkeit |
| v_F = | Fahrzeug-Eigengeschwindigkeit |
| Psi_null_punkt = | Drehraten-Offset |
| Psi_m_punkt = | nicht Offset-korrigierter Drehratenmeßwert |

Sollen die absoluten, Offset-freien Werte für den Winkel und die Drehrate angegeben werden so ergibt sich erfindungsgemäß:

$$alpha = alpha\_m - alpha\_null$$

und

$$Psi\_punkt = Psi\_m\_punkt - Psi\_null\_punkt \; daraus \; folgt:$$

$$alpha \approx alpha\_m + ( \; \cos(alpha\_m) \; / \sin(alpha\_m) \; )$$

$$+ ( \; 1 \; / \sin(alpha\_m) \cdot d\_m\_punkt \; / \; v\_F \; )$$

$$Psi\_ \; punkt \approx v\_F \; / \; (d\_m \cdot d\_m\_punkt) \cdot$$

$$( \; d/dt( \; d\_m \cdot \sin \; (alpha\_m) \; )$$

$$- \; alpha\_null \cdot d/dt( \; d\_m \cdot \cos(alpha\_m) \; ))$$

wobei:

| | |
|---|---|
| alpha = | ermittelter Offset-freier Wert für den Winkel |
| Psi_punkt = | ermittelter Offset-freier Wert für die Drehrate |

Hier ist in besonders vorteilhafter Weise in der Bestimmungsgleichung für die Drehrate keine Abhängigkeit von einer gemessenen Drehrate mehr vorhanden. Es könnte somit bei Ausfall oder Defekt des Drehratensensors ein Ersatzwert bestimmt werden oder es kann der bestimmte Drehratenwert zu einer Plausibilitätsüberprüfung des gemessenen Drehratenwertes verwendet werden.

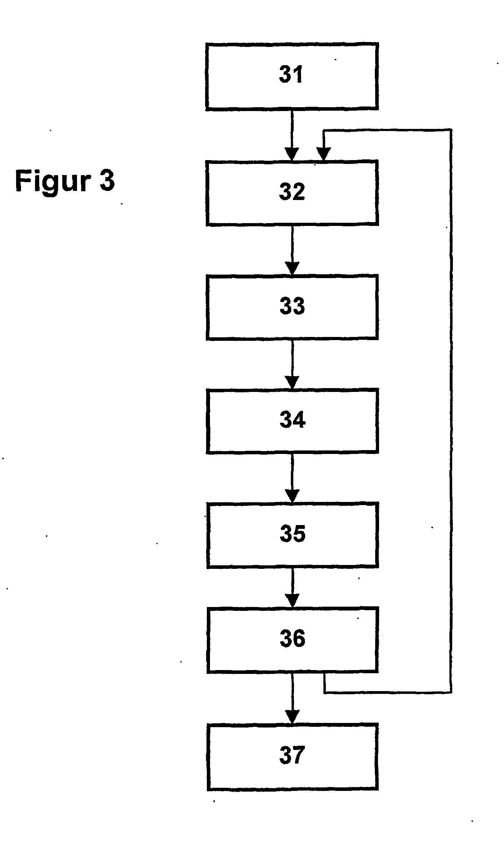

Figur 3 zeigt ein Ablaufdiagramm des erfindungsgemäßen Verfahrens. In Block 31 beginnt die Inbetriebnahme des Kraftfahrzeuges bzw. die Inbetriebnahme des Kraftfahrzeug-Radarsystems. In Schritt 32 werden die von dem Radarsystem ermittelten Winkel-, Abstands- und Relativgeschwindigkeitswerte eines stehenden Objekts ermittelt. In Schritt 33 wird die Fahrzeugeigengeschwindigkeit gemessen oder von einem Bussystem oder einem Kombiinstrument übernommen. Je nachdem, ob der Drehratenwert ohne den gemessenen Drehratenwert bestimmt werden soll, oder ob ein Korrekturwert für den gemessenen Drehratenwert bestimmt werden soll, wird in Schritt 34 der gemessene Drehratenwert erfaßt. In Schritt 35 erfolgt die erfindungsgemäße Bestimmung der Korrekturwerte für den Winkelfehler des Radarsystems und entweder die Bestimmung des Korrekturwertes für die Drehrate oder die Drehrate selbst. Diese Daten werden in Schritt 36 in einen Speicher eingelesen und dort entsprechend den Erläuterungen zu Figur 1 gefiltert und/oder gemittelt. In Schritt 37 werden die endgültigen bestimmten Korrekturwerte für den Winkelfehler des Radarsystems und entweder die Bestimmung des Korrekturwertes für die Drehrate oder die Drehrate selbst ausgegeben.

Figur 4 zeigt eine Darstellung einer erfindungsgemäßen Vorrichtung. Mit 41 ist ein Radarsensor bezeichnet, der seine Meßdaten an ein Steuergerät 42 übermittelt. In dem Steuergerät 42 ist weiterhin eine Speicher-, Filter- und Mittelungseinheit 43 integriert, die die in den Beschreibungen zu den Figuren 1 und 3 erwähnten Funktionen übernehmen kann. Ein im Kraftfahrzeug vorhandenen Sensor für die eigene Geschwindigkeit ist mit 44 bezeichnet und ein Drehratensensor mit 45. Mit 46 ist ein im Fahrzeug gegebenenfalls vorhandenes Bussystem, beispielsweise ein CAN-Bus bezeichnet.

Der große Vorteil des erfindungsgemäßen Verfahrens besteht darin, daß Meßdaten stehender Objekte unter Benutzung der angegebenen Beziehungen zur Bestimmung von Winkeloffset, Drehratenoffset und Drehrate selbst zu benutzen.

Im allgemeinen Fall kann es sich bei dem in Figur 4 dargestellten Sensor 41 um einen allgemeinen Sensor handeln, mit dem sich die Lage des Zielobjekts 13 zum eigenen Fahrzeug 10 hinsichtlich Abstand und Winkel oder Längs- und Querversatz bestimmen läßt. Solche Sensoren können neben dem in den vorstehenden Figuren ausführlich beschriebenen Radarprinzip beispielsweise auch als LIDAR-Sensor, als Ultraschall-Sensor, als Infrarot-Sensor oder als optischer CCD- oder CMOS-Sensor ausgebildet sein. Hierbei kann die zu bestimmende Relativgeschwindigkeit zwischen dem eigenen Fahrzeug 10 und dem Zielobjekt 13 auch aus ermittelten Abstandsdaten berechnet werden. Bei Verwendung von Längs-und Querversatzwerten statt Abstands- und Winkelwerten sind die in der Beschreibung der Ausführungsbeispiele angeführten Formeln durch den Fachmann entsprechend umzustellen.

## Patentansprüche

1. Verfahren zur Dejustageerkennung bei einem Kraftfahrzeug-Sensorsystem, bei dem Signale ausgesendet werden, bei dem von einem stehenden Objekt reflektierte Signale empfangen werden und bei dem anhand der ausgesendeten und der empfangenen Signale ein relativer Winkel (alpha_m) und ein relativer Abstand (d_m) oder ein Längs- und ein Querversatz zwischen dem detektierten Objekt und einer Bezugsachse des Kraftfahrzeugs sowie eine Relativgeschwindigkeit (d_m_punkt) zwischen dem detektierten Objekt und dem Kraftfahrzeug bestimmt werden, daß anhand des relativen Winkels (alpha_m), des relativen Abstands (d_m) und einer Fahrzeug-Eigengeschwindigkeit (v_F) oder anhand des Längs-, des Querversatzes und der Fahrzeug-Eigengeschwindigkeit (v_F) ein Korrekturwert (alpha_null) für den relativen Winkel (alpha_m) bestimmt wird, **dadurch gekennzeichnet, daß** anhand des relativen Winkels (alpha_m), des Korrekturwerts (alpha_null), des relativen Abstands (d_m), der Relativgeschwindigkeit (d_m_punkt), der Fahrzeug-Eigengeschwindigkeit (v_F) und einer von einem Drehratensensor gelieferten Drehrate (Psi_m_punkt) ein Korrekturwert (Psi_null_punkt)für die Drehrate (Psi_m_punkt) bestimmt wird.

2. Verfahren nach Anspruch 1, **dadurch gekennzeichnet, daß** anhand des relativen Winkels (alpha_m), des Korrekturwerts (alpha_null), des relativen Abstands (d_m), der Relativgeschwindigkeit (d_m_punkt) und der Fahrzeug-Eigengeschwindigkeit (v_F) eine Drehrate (Psi_punkt)des Kraftfahrzeugs bestimmt wird.

3. Verfahren nach Anspruch 1, **dadurch gekennzeichnet, daß** Verfahren unabhängig von der gegenwärtigen Fahrsituation des Kraftfahrzeugs, insbesondere unabhängig von einer Kurvenfahrt, durchgeführt wird.

4. Vorrichtung zur Durchführung des Verfahrens zur Dejustageerkennung bei einem Kraftfahrzeug-Sensorsystem nach Anspruch 1 mit

   - Sendemitteln zum Senden von Signalen;

   - Empfangsmitteln zum Empfangen von von einem stehenden Objekt reflektierten Signalen;

   - Mitteln zum Bestimmen eines relativen Winkels (alpha_m) und eines relativen Abstandes (d_m) oder eines Längs-und eines Querversatzes zwischen dem detektierten Objekt und einer Bezugsachse des Kraftfahrzeugs sowie einer Relativgeschwindigkeit (d_m_punkt) zwischen dem detektierten Objekt und dem Kraftfahrzeug anhand der ausgesendeten und der empfangenen Signale;

   - Mitteln zur Bestimmung eines Korrekturwertes (alpha_null) für den relativen Winkel (alpha_m) anhand des relativen Winkels (alpha_m), des relativen Abstands (d_m) und einer Fahrzeug-Eigengeschwindigkeit (v_F) oder anhand des Längs-, des Querversatzes und der Fahrzeug Eigengeschwindigkeit (v_F),

   **dadurch gekennzeichnet, daß**

Mittel zur Bestimmung vorgesehen sind, die anhand des relativen Winkels (alpha_m), des Korrekturwerts (alpha_null), des relativen Abstands (d_m), der Relativgeschwindigkeit (d_m_punkt), der Fahrzeug-Eigengeschwindigkeit (v_F) und einer von einem Drehratensensor gelieferten Drehrate (Psi_m_punkt) einen Korrekturwert (Psi_null_punkt) für die Drehrate (Psi_m_punkt) bestimmen.

**Claims**

1. Method for detecting misalignment in a motor vehicle sensor system in which signals are emitted, in which signals reflected from a stationary object are received, and in which a relative angle (alpha_m) and a relative distance (d_m) or a longitudinal offset and a transverse offset between the detected object and a reference axis of the motor vehicle as well as a relative speed (d_m_punkt) between the detected object and the motor vehicle are determined by means of the emitted and received signals, in that a correction value (alpha_null) for the relative angle (alpha_m) is determined by means of the relative angle (alpha_m), the relative distance (d_m) and a speed (v_F) of the vehicle or by means of the longitudinal offset, the transverse offset and the speed (v_F) of the vehicle, **characterized in that** a correction value (Psi_null_punkt) for the rotational speed (Psi_m_punkt) is determined by means of the relative angle (alpha_m), the correction value (alpha_null), the relative distance (d_m), the relative speed (d_m_punkt), the speed (v_F) of the vehicle and a rotational speed (Psi_m_punkt) which is supplied by a rotational speed sensor.

2. Method according to Claim 1, **characterized in that** a rotational speed (Psi_punkt) of the motor vehicle is determined by means of the relative angle (alpha_m), the correction value (alpha_null), the relative distance (d_m), the relative speed (d_m_punkt) and the speed (v_F) of the vehicle.

3. Method according to Claim 1, **characterized in that** the method is carried out independently of the present driving situation of the motor vehicle, in particular independently of cornering.

4. Device for carrying out the method for detecting misalignment in a motor vehicle sensor system according to Claim 1, having

   - transmission means for transmitting signals,

   - reception means for receiving signals which are reflected from a stationary object,

   - means for determining a relative angle (alpha_m) and a relative distance (d_m) or a longitudinal offset and a transverse offset between the detected object and a reference axis of the motor vehicle, as well as a relative speed (d_m_punkt) between the detected object and the motor vehicle by means of the emitted and the received signals,

   - means for determining a correction value (alpha_null) for the relative angle (alpha_m) by means of the relative angle (alpha_m), the relative distance (d_m) and a speed (v_F) of the vehicle, or by means of the longitudinal offset, the transverse offset and the speed (v_F) of the vehicle,

   **characterized in that**
   determining means are provided which determine a correction value (Psi_null_punkt) for the rotational speed (Psi_m_punkt) by means of the relative angle (alpha_m), the correction value (alpha_null), the relative distance (d_m), the relative speed (d_m_punkt), the speed (v_F) of the vehicle and a rotational speed (Psi_m_punkt) which is supplied by a rotational speed sensor.

**Revendications**

1. Procédé de détection d'un désalignement dans un système capteur de véhicule automobile selon lequel

   - des signaux sont émis puis reçus après réflexion sur un objet fixe,
   - à l'aide de ces signaux émis et reçus sont déterminés un angle relatif (alpha_m) et une distance relative (d_m) ou un décalage longitudinal et un décalage transversal entre l'objet détecté et un axe de référence du véhicule ainsi qu'une vitesse relative (d_m_point) entre l'objet détecté et le véhicule,

- à l'aide de l'angle relatif (alpha_m), de la distance relative (d_m) et de la vitesse propre du véhicule (v_F) ou à l'aide du décalage longitudinal, du décalage transversal et de la vitesse propre du véhicule (v_F), une valeur corrective (alpha-zéro) de l'angle relatif (alpha_m) est déterminée,

**caractérisé en ce qu'**
à l'aide de l'angle relatif (alpha_m), de la valeur corrective (alpha_zéro), de la distance relative (d_m), de la vitesse relative (d_m_point), de la vitesse propre du véhicule (v_F) et d'un taux de rotation délivré par un capteur de taux de rotation, une valeur corrective (psi_zéro_point) du taux de rotation (psi_m_point) est déterminée.

2. Procédé selon la revendication 1,
**caractérisé en ce qu'**
à l'aide de l'angle relatif (alpha_m), de la valeur corrective (alpha_zéro), de la distance relative (d_m), de la vitesse relative (d_m_point) et de la vitesse propre du véhicule (v_F) un taux de rotation (psi_point) du véhicule est déterminé.

3. Procédé selon la revendication 1,
**caractérisé en ce que**
le procédé est mis en oeuvre indépendamment de la situation de circulation présente du véhicule, notamment indépendamment d'une circulation en courbe.

4. Dispositif pour la mise en oeuvre de la détection d'un désalignement dans un système capteur de véhicule automobile selon la revendication 1, comprenant

- des moyens pour émettre des signaux,
- des moyens pour recevoir des signaux réfléchis par un objet fixe,
- des moyens pour déterminer au moyen des signaux émis et les signaux reçus, un angle relatif (alpha_m) et une distance relative (d_m) ou un décalage longitudinal et un décalage transversal entre l'objet détecté et un axe de référence du véhicule ainsi qu'une vitesse relative (d_m_point) entre l'objet détecté et le véhicule,
- des moyens pour déterminer une valeur corrective (alpha_zéro) de l'angle relatif (alpha_m) au moyen de cet angle, de la distance relative (d_m) et d'une vitesse propre du véhicule (v_F) ou au moyen du décalage longitudinal, du décalage transversal et de la vitesse propre du véhicule (v_F),

**caractérisé en ce que**
des moyens sont prévus pour déterminer à l'aide de l'angle relatif (alpha_m), de la valeur corrective (alpha_zéro), de la distance relative (d_m), de la vitesse relative (d_m_point), de la vitesse propre du véhicule (v_F) et d'un taux de rotation (psi_m_point) délivré par un capteur de rotation, une valeur corrective (psi_zéro_point) du taux de rotation (psi_m_point).

## Figur 1

## Figur 2

## Figur 4

**Figur 3**